Europäisches Patentamt

European Patent Office

Office européen des brevets

(11) Publication number: **0 275 840**
**A1**

## EUROPEAN PATENT APPLICATION

(21) Application number: 87830444.3

(22) Date of filing: **15.12.87**

(51) Int. Cl.⁴ **B60T 8/50**

(30) Priority: **30.12.86 IT 6799086**

(43) Date of publication of application:
**27.07.88 Bulletin 88/30**

(84) Designated Contracting States:
**AT CH DE ES FR GB IT LI NL SE**

(71) Applicant: **INDUSTRIE MAGNETI MARELLI S.r.l.**
**Via Adriano 81**
**I-20128 Milano(IT)**

(72) Inventor: **Dotti, Giulio**
**Via Anco Marzio, 8**
**I-20123 Milano(IT)**

(74) Representative: **Bosotti, Luciano et al**
**c/o Jacobacci-Casetta & Perani S.p.A. Via**
**Alfieri, 17**
**I-10121 Torino(IT)**

(54) Valve assembly for motor vehicle braking systems with a wheel anti-locking function.

(57) A choke element (13, 15), which reduces the net section for propagation of the operating fluid pressure to the braking members (3) when the obturator (7) is caused to open in a pulsed manner for applying again the braking pressure after an anti-locking operation has been carried out, is mounted in the duct section (4) on which the obturator (7) of the valve acts. The effect of the speed of movement of the obturator (7) on the reapplication of the brakes is thus substantially eliminated.

FIG. 3

EP 0 275 840 A1

# Valve assembly for motor vehicle braking systems with a wheel anti-locking function.

The present invention relates to valve assemblies for motor vehicle braking systems with a wheel anti-locking function and relates particularly to a valve assembly comprising:
- a portion of duct intended to be interposed in a line for supplying operating fluid pressure to the braking members of the motor vehicle, and
- an obturator acting on this duct portion and able to be brought selectively into the open position to allow the propagation of the fluid pressure through the duct portion.

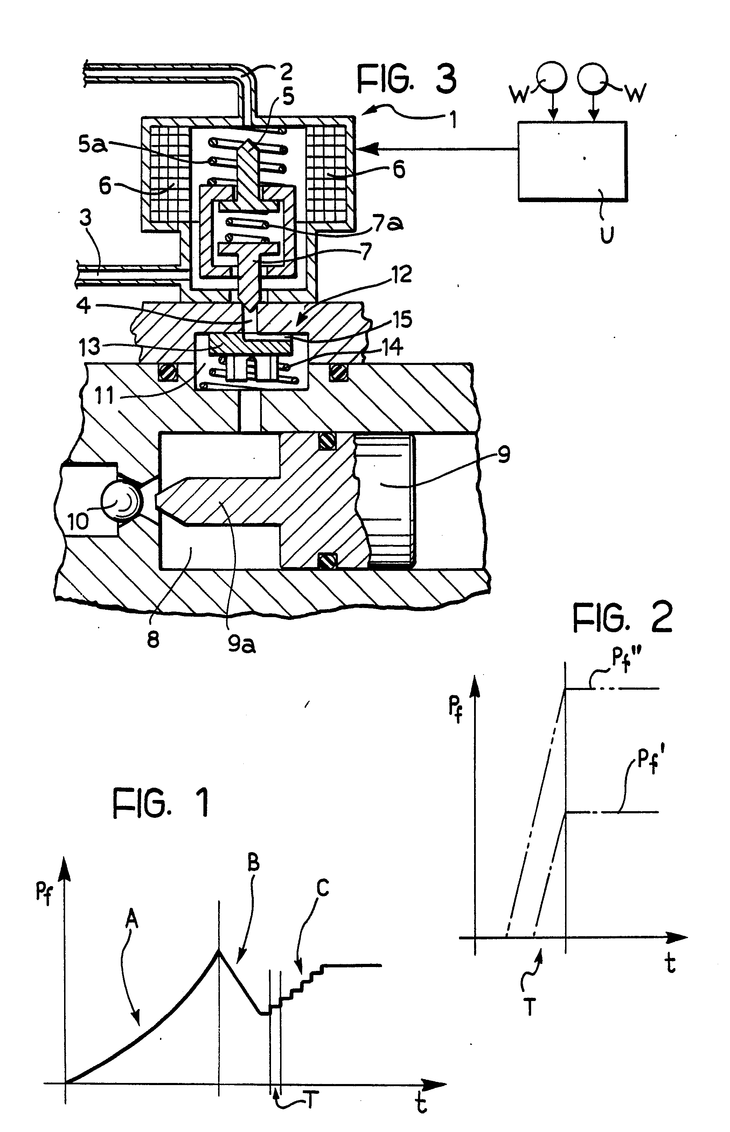

Valve assemblies of the type specified above, usually consisting of solenoid valves, are intended to be used according to the criteria schematically illustrated in the graph of Figure 1 of the appended drawings.

In this graph, the abscissa refers to a time coordinate t, while a typical variation of the braking pressure $p_f$ transmitted to the braking members of the motor vehicle is plotted on the ordinate as a function of time.

In general, after an initial braking phase A, in which the pressure $p_f$ increases gradually due to the pressure exerted by the driver of the motor vehicle on the brake pedal, the intervention of the anti-locking unit (ABS) - which can detect the tendency of the wheels of the motor vehicle to become locked and to slide on the ground - automatically causes a gradual increase in the pressure $p_f$.

At the end of the "brake release" phase, indicated B, the anti-locking unit - always in dependence on signals from sensors associated with the wheels indicative of the re-establishment of a condition of normal rolling of the wheels on the ground causes the gradual re-application of the braking pressure. A new brake release phase, started when the tendency of one or more wheels to become locked again is detected, can then follow this "rebraking" phase, indicated C, in a generally cyclic progression.

Such anti-lock braking and brake release cycles are brought about according to criteria widely known in the art, which will not be explained in detail in the present specification.

It is also known to achieve gradual reapplication of the braking pressure during the phase C in successive stages according to a stepped variation, as schematically illustrated in the graph of Figure 1.

Such a result is obtained by causing the solenoid valve which controls the application of the operating pressure to the braking members to open in a pulsed manner. For this purpose electrical pulses of reduced duration, of the order of a few milliseconds, are applied to the excitation coil of the solenoid valve.

One of the intervals of application of such excitation pulses is schematically indicated T in the graph of Figure 1.

Experimental data show, however, that for excitation intervals T of equal duration, the law of increase of the pressure $p_f$ can vary widely in dependence on the mechanical and hydraulic characteristics of the solenoid valve, such as the working tolerances and the elastic force exerted by the springs which act on the obturator, and in dependence on the rise in pressure across the valve. By way of example, the graph of Figure 2 (which is a reproduction of a portion of the graph of Figure 1 on an enlarged scale) illustrates a trend of slow increase $p_f'$ (chain line) and a trend of fast increase $p_f''$ (line and two dots) corresponding to two different effective moments of opening of the valve and equal duration of the excitation interval T.

This difference in the possible behaviour of the solenoid for the same duration of the interval T of externally controlled opening translates into final values of the braking pressure $p_f$ which vary greatly.

The behaviour of the individual solenoid valve cannot be determined with precision, since it is affected by its constructional parameters and by the relative tolerances in a manner which is difficult to control. The behaviour of the individual solenoid valve can also vary with time, as a result of gradual wear and use.

The present invention has the object of producing a solenoid valve assembly of the type specified above, in which the propagation of the fluid pressure through the solenoid valve itself during the phase of gradual reapplication of the operating pressure to the braking members of the motor vehicle takes place in a completely fixed and controlled manner without being appreciably affected by variations (tolerances, wear, etc.) in the parameters which control the operating characteristics of the solenoid valve itself, particularly the electrical and mechanical response time of the obturator.

According to the present invention, this object is achieved by virtue of a valve assembly of the type specified above, characterised in that a choke element is provided in the duct portion and is able to reduce the net section for propagation of the fluid pressure through the duct portion to the braking members of the motor vehicle.

In the valve assembly according to the invention, the rate of propagation of the fluid operating pressure (that is, the rate at which the pressure $p_f$ increases during each of the intervals T) is determined by the size of the section of the choke (usually consisting of an auxiliary obturator) inserted in the duct portion of the solenoid valve. The final pressure (or rather the increase in pressure) attained at the end of each interval T is thus not appreciably affected by changes in the parameters able to vary the moment of effective opening of the obturator of the valve, as the delay time of the solenoid valve is now negligible compared with the effective opening time of the obturator.

Whilst the anti-locking action (ABS) is being carried out, the auxiliary obturator, which acts as a choke, disengages the duct of the solenoid valve to make the whole section of the duct available for the discharge of the braking pressure.

The invention will now be described, purely by way of non-limiting example, with reference to the appended drawings, in which:

Figures 1 and 2 are two time graphs, to which reference has already be made in the introductory part of the present specification, and

Figure 3 illustrates schematically the structure of a valve assembly (solenoid valve) according to the invention.

The embodiment referred to in Figure 3 relates to a recently proposed device for the selective application of fluid operating pressure to the braking members of a motor vehicle, in which a wheel anti-locking function is provided. The complete explanation of the whole structure of this device, which is not itself the subject of the present invention, is not essential to the understanding of the invention.

For this purpose, it will be sufficient to mention that three ducts, indicated 2, 3 and 4 respectively, lead to the solenoid valve according to the invention, generally indicated 1.

The duct 2 is connected to a source for supplying operating fluid under pressure, such as the master cylinder (not illustrated) of the braking system of a motor vehicle.

The duct 3 (or a network of functionally equivalent ducts) is intended to transfer the fluid operating pressure to the braking members of the motor vehicle (also not illustrated).

The latter duct is permanently accessible or open, whilst the duct 2 can be opened or closed selectively by the movement of an obturator 5 provided with a return spring 5a effected by the supply of an excitation coil 6.

In a substantially similar manner, a further obturator 7 provided with a return spring 7a allows the duct 4 to be opened or closed still due to the energisation current applied to the coil 6.

The energisation of the coil 6 is controlled by a control unit (central control ) U. The unit U is connected to the sensors W which detect the condition in which one or more wheels of the motor vehicle tend to become locked. The unit U governs the operation of the anti-locking function, controlling the operation of the phases A, B and C according to the criteria described above.

At its end opposite the solenoid valve 1, the duct 4 opens into a chamber 8 which can act as a collecting tank for the brake operating fluid. A piston 9 moves sealingly in the chamber 8 and is provided with an appendage 9a which allows a ball valve 10 to be opened or closed in dependence on the position assumed by the piston 9 within the chamber 8. The movement of the piston 9 is controlled, also in known manner, by a pusher element or by a fluid pressure acting on its face opposite the appendage 9a.

The duct 4 has an enlarged middle part 11 in which there is an annular shoulder 12 facing towards the chamber 8, that is, away from the solenoid valve 1.

An auxiliary obturator, indicated 13, is urged against the shoulder 12 by a spring 14.

The auxiliary obturator 13 is traversed by an opening 15 which allows the propagation of fluid pressure from the chamber 8 to the solenoid valve 1 even when the obturator 13 is urged against the shoulder 12.

In general, the section of the opening 15, which, in the example illustrated, consists of a radial groove provided in the face of the obturator 13 intended to bear against the shoulder 12, is selected so as to be less than the free section of the duct 4, that is, the passage section available for the fluid pressure when the obturator 13 is moved away from the shoulder 12, overcoming the return force exerted by the spring 14.

The operation of the solenoid valve 1 will now be described briefly.

As stated, the general operating criteria of the solenoid valve are within the scope of a prior-art anti-lock braking system. The present invention relates particularly to the use of an auxiliary obturator 13 for controlling the propagation of the fluid operating pressure between the chamber 8 and the ducts 3 through the duct 4 controlled by the obturator 7.

In normal running conditions of the vehicle (absence of braking), the source (master cylinder) to which the duct 2 leads is not activated and the solenoid valve 1 is controlled so as to keep the obturator 5 in the open position and the obturator 7 in the closed condition.

The piston 9 is subjected to the action of thrust means (not illustrated) which keep it inside the chamber 8 in conditions of maximum advance towards the ball valve 10 which is kept in the open position.

When the driver operates the brakes of the vehicle (phase A in Figure 1), the pressure generated by the source to which the duct 2 is connected is propagated through the solenoid valve 1 towards the ducts 3, causing operation of the braking members ($p_f$ increasing).

When the sensors W detect the tendency of one or more wheels of the motor vehicle to lock, the unit U controls the solenoid valve 1 in such a way as to cause closure of the obturator 5. Consequently, the braking members connected to the duct 3 are, so as to speak, separated from the master cylinder which generates the braking pressure.

The unit U thus causes the obturator 7 to open so that the pressurised braking fluid accumulated in the ducts 3 can flow into the chamber 8 through the duct 4. In this phase of operation, due to the deactivation of the thrust means associated with it, the piston 9 can move away freely from the ball valve 10 which is thus brought into the closed position. At the same time, the propagation of the fluid pressure from the solenoid valve 1 to the chamber 8 is not obstructed by the auxiliary obturator 13, as the same pressure moves the obturator away from the annular shoulder 12, overcoming the return force exerted by the spring 14.

The operating conditions just described correspond in practice to the development of the brake release function indicated B in the graph of Figure 1.

When the sensors W detect that the wheel or wheels which were in danger of locking have started turning again at a speed sufficient to ensure a good grip on the ground, the unit U starts to carry out phase C which causes the gradual application of the operating pressure to the braking members.

This result is obtained through the movement of the piston 9 which approaches the ball valve 10 again under the action of the mechanical or fluid thrust means (not illustrated), causing the braking fluid to flow back from the chamber 8 towards the ducts 3 through the duct 4.

In this phase, corresponding to the phase indicated C in the graph of Figure 1, the propagation of the fluid operating pressure from the chamber 8 towards the ducts 3 is controlled by the obturator 7 which is opened and closed rhythmically by the application of operating pulses of brief duration (interval T), as described in the intruduction to the present specification.

The direction of the pressure gradient (from the chamber 8 towards the ducts 3) is, however, such as to force the auxiliary obturator 13 against the shoulder 12. The rate of propagation of the operating pressure is therefore controlled, each time the obturator 7 is opened, by the size of the section of the passage defined by the opening 15 provided in the auxiliary obturator 13.

The size of this section is selected in such a way as to reduce the rate of propagation of the braking pressure from the chamber 8 towards the duct 3 in such a way as to make the pressure reached at the end of each energisation interval T substantially independent of the moment of effective opening of the obturator 7. In this way, the rate at which the brake reapplication operation takes place during phase C also becomes substantially independent of the individual characteristics (working tolerances, tolerances of the springs, wear...) of the solenoid valve 1 and of the obturator 7 in particular. The passage section of the opening 15 can be selected, in relation to the typical delay time of opening of the obturator 7, so that it is possible to obtain the desired increases in braking pressure by keeping the obturator open for a time at least equal to the opening delay time.

In other words, whilst in previously known devices the rhythmic opening of the obturator during the brake reapplication phase causes the pressure to increase by successive steps formed by a phase of very rapid, almost instantaneous increase (affected by delays in opening of the obturator) followed by an interval when it is maintained, the increasing phase is rendered slower in the solution of the invention, so that it is made to last for a finite interval and is made less sensitive to the intrinsic characteristics of the solenoid valve.

The braking pressure $p_f$ is thus propagated towards the ducts 3 at a fixed rate determined unambiguously by the section of the opening 15 provided in the obturator 13.

At the same time, the fact that the obturator 13 can move away from the shoulder 12 when the direction of the pressure gradient across the duct 4 is reversed enables the full section of the duct 4 to be used during the brake release phases (passage of the fluid from the duct 3 towards the accumulation chamber 8).

## Claims

1. A valve assembly for motor vehicle braking systems with a wheel anti-locking function, comprising:
- a duct portion (4) intended to be interposed in a line (3,8) for supplying operating fluid pressure to the braking members of the motor vehicle,
- an obturator (7) acting on this duct portion (4) and able to be brought selectively into the open position to allow propagation of the fluid pressure through the duct portion (4),
characterised in that the duct portion (4) is provided with a choke element (13, 15) which is able to reduce the net section for propagation of the fluid pressure through the duct portion (4) towards the braking members of the motor vehicle.

2. A valve assembly according to Claim 1, characterised in that the duct portion (4) has a shoulder (12) and in that an auxiliary obturator (13) is provided which faces the shoulder 12) in such a position that the auxiliary obturator (13) is forced towards and away from the shoulder (12) when the fluid pressure is propagated towards the braking members of the motor vehicle and in the opposite direction (3,8) rspectively, said auxiliary obturator (13) being traversed by at least one opening (15) defining the net section for propagation of the fluid pressure towards the braking members of the motor vehicle.

3. A valve assembly according to Claim 2, characterised in that the auxiliary obturator (13) carries associated elastic return means (14) to return the auxiliary obturator (13) itself against the shoulder (12).

FIG. 3

FIG. 2

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | DE-A-1 806 452 (PHILIPS)<br>* Page 7, line 28 - page 8, line 25; figure 4 *<br>--- | 1-3 | B 60 T 8/50 |
| A | FR-A-2 377 913 (TEVES)<br>* Page 4, line 30 - page 5, line 6; figures *<br>--- | 1-3 | |
| A | GB-A-2 119 881 (LUCAS)<br>* Abstract; figures 2,3 *<br>----- | 1-3 | |

TECHNICAL FIELDS SEARCHED (Int. Cl.4)

B 60 T

The present search report has been drawn up for all claims

| Place of search | Date of completion of the search | Examiner |
|---|---|---|
| THE HAGUE | 06-04-1988 | BLURTON M.D |